# EUROPÄISCHE PATENTANMELDUNG

(11) **EP 1 434 333 A2**
(43) Veröffentlichungstag der Anmeldung: **30.06.2004**
(21) Anmeldenummer: 03014834.0
(22) Anmeldetag: 30.06.2003
(51) Int. Cl.: H02K 13/04, H02K 3/50

(54) **Verbindungen der Enden einer Ankerwicklung mit einem Gleichstrom-Kommutatormaschine**

(30) Priorität: 23.12.2002 DE 10260846
(71) Anmelder: ROBERT BOSCH GMBH, 70442 Stuttgart (DE)
(72) Erfinder: Schustek, Siegfried, 71254 Ditzingen (DE); Ossenkopp, Stefan, 31177 Harsum (DE); Braun, Hans, 70178 Stuttgart (DE); Franz, Peter, 31199 Diekholzen (DE)

(57) **Zusammenfassung**

Elektrische Maschine, insbesondere Gleichstrommotor (10) eines Starters von Brennkraftmaschinen mit einem Kommutatorläufer (11), dessen Läuferwicklung (15) aus Leiterstäben (16, 17) mindestens einer oberen und einer unteren Lage, die in Längsnuten (18) eines Läufer-Blechpaketes (19) angeordnet sind und deren stirnseitige Wickelköpfe (20, 21) aus Verbindungen von Leitern der oberen Lage zu versetzten Leitern der unteren Lage bestehen und die auf einer Stirnseite mit den Lamellen eines Kommutators (13) kontaktiert sind. Zur Verkürzung der axialen Baulänge des Kommutatorläufers (11) wird vorgeschlagen, dass jede der stirnseitigen Verbindungen der Läuferstäbe (16, 17) an mindestens einem der beiden Wickelköpfe (20, 21) ein separat hergestelltes Verbindungselement (25) bildet, dessen zwei Enden jeweils mit dem axialen Endabschnitt eines Leiterstabes der oberen Lage und der unteren Lage verbunden ist.

## Beschreibung

### Stand der Technik

Die Erfindung betrifft eine elektrische Maschine, insbesondere eine Gleichstrommaschine, vorzugsweise für Starter von Brennkraftmaschinen, mit einem Kommutatorläufer nach dem Oberbegriff des Anspruchs 1.

Eine elektrische Maschine dieser Art ist aus der DE 197 43 122 A1 als Starterantrieb für Brennkraftmaschinen bekannt. Nachteilig ist dort die große axiale Baulänge des Kommutatorläufers aufgrund der ausladenden Wickelköpfe. An den Wickelköpfen werden die in zwei Lagen radial übereinander in den Nuten angeordneten Leiterstäbe einerseits haarnadelförmig gekröpft und an ihren kommutatorseitigen Enden gegeneinander verschränkt und jeweils paarweise mit den Kommutator-Lamellen verschweißt. Die Stromversorgung der Läuferwicklung erfolgt dabei über Kohlebürsten, unter denen die Kommutator-Lamellen hindurch laufen.

Zur Verkürzung der axialen Baulänge derartiger Läufer ist bereits aus der EP 072 52 16 B1 bekannt, die Leiterstäbe der Läuferwicklung an den Stirnseiten des Läufer-Blechpaketes einzeln abzukröpfen und paarweise miteinander zu Wickelkopfverbindungen zu verschweißen. Da jedoch die abgekröpften Leiterenden lose sind, müssen sie zum Verschweißen in aufwendiger Weise zunächst aufgenommen und zueinander positioniert werden.

Mit der vorliegenden Erfindung wird angestrebt, die axiale Baulänge des Kommutatorläufers zu verkürzen, ohne die Leiterenden beim Verschweißen der Wickelkopfverbindungen besonders positionieren zu müssen.

### Vorteile der Erfindung

Die elektrische Maschine mit den kennzeichnenden Merkmalen des Anspruchs 1 hat den Vorteil, dass aufgrund der separat hergestellten Verbindungselemente die Leiterstäbe der Läuferwicklung nunmehr an den Wickelköpfen mit ihren Endabschnitten axial aus den Längsnuten des Blechpaketes vorstehen und dort ohne besondere Positionierung mit je einem Ende der Verbindungselemente zu kontaktieren sind. Ein weiterer Fertigungsvorteil der neuen Lösung besteht darin, dass die separaten Verbindungselemente zum Verschweißen mit den Leiterstäben sowohl einzeln von außen zugeführt werden können als auch im Verbund mit allen Leitungsverbindungen eines Wickelkopfes vor dem Kontaktieren beziehungsweise Verschweißen mit den Leiterstäben auf der Stirnseite des Läufer-Blechpaketes fixiert werden können.

Vorteilhafte Weiterbildungen und Ausgestaltungen der Erfindung ergeben sich aus den übrigen, in den Unteransprüchen aufgeführten Merkmalen.

So sind zur Erzielung eines möglichst flachbauenden Wickelkopfes die Verbindungselemente zweckmäßigerweise als U-förmige Teile ausgebildet. Um an den Endabschnitten der Leiterstäbe leicht zugängliche Verbindungsstellen zu bekommen, ist zweckmäßigerweise an den U-förmigen Teilen jeweils deren Joch vor der Stirnseite des Läufer-Blechpaketes axial sowie radial ausgerichtet und deren zwei Schenkel sind aus einer vom Joch ausgehenden, radial nach außen gerichteten Ebene in entgegengesetzten Richtungen abgewinkelt. Dabei sind die Enden der beiden Schenkel jeweils mit einem axialen Endabschnitt eines Leiterstabes der oberen, beziehungsweise der unteren Lage elektrisch leitend verbunden. Um dabei auch die Leiterstäbe der unteren Lage möglichst frei zugänglich mit den Verbindungselementen kontaktieren zu können, ist von den axial hintereinander angeordneten Schenkeln der U-förmigen Teile der vordere Schenkel jeweils mit einem Leiterstab der unteren Lage und der hintere Schenkel jeweils mit einem Leiterstab der oberen Lage verbunden. Für eine möglichst einfache Kontaktierung ist ferner der hintere Schenkel jeweils zwischen zwei in benachbarten Längsnuten des Läufer-Blechpaketes angeordneten Leiterstäben der unteren Lage hindurchgeführt und sein Ende mit einem der darüberliegenden Leiterstäbe der oberen Lage kontaktiert. Darüber hinaus ist zweckmäßigerweise jeweils das Ende des hinteren Schenkels soweit umgebogen, dass es mit einem der Läuferachse abgewandten Umfangsbereich des Leiterstabes der oberen Lage kontaktiert, insbesondere verschweißt ist. Schließlich ist für eine zuverlässige Kontaktierung noch der vordere Schenkel jeweils an seinem Ende mit einem der Läuferachse zugewandten Umfangsbereich des Leiterstabes der unteren Lage kontaktiert, insbesondere verschweißt.

Die Verbindungselemente auf der dem Kommutator abgewandten Seite des Läufer-Blechpaketes lassen sich in besonders einfacher Weise herstellen und dort anbringen, in dem sie gemeinsam als U-förmige Teile aus einem Blechstreifen freigestanzt, durch Biegen zu einem Kreisring und durch Spreizen ihrer Schenkel in ihre endgültige Form gebracht und schließlich miteinander in einem Kunststoffteil mit Ausnahme der Schenkelenden aufgenommen, insbesondere eingebettet werden.

In Weiterbildung der Erfindung wird ferner vorgeschlagen, dass die als U-förmigen Teile ausgebildeten Verbindungselemente auf der Kommutatorseite des Läufer-Blechpaketes Anschlussfahnen von Kommutator-Lamellen bilden. Die Anschlussfahnen sind dabei am hinteren axialen Ende der Lamellen eines Trommelkommutators angeformt.

Alternativ dazu ist es ferner möglich, die erfindungsgemäßen Verbindungselemente nur an dem dem Kommutator abgewandten Wickelkopf vorzusehen und dazu die Leiterstäbe paarweise als haarnadelförmig gebogene Spulenelemente von der Kommutatorseite her in die Längsnuten des Läufer-Blechpaketes einzusetzen. Für diesen Fall wird in Weiterbildung der Erfindung vorgeschlagen, die Verbindungsabschnitte der paarweisen Leiterstäbe auf der dem Kommutator zugewandten Stirnseite des Läufer-Blechpaketes U-förmig auf jeweils eine Anschlussstelle einer Kommutator-Lamelle abzukröpfen, wobei jeder Verbindungsabschnitt an dem Joch der U-förmigen Abkröpfung mit einer Kommutator-Lamelle verschweißt ist.

### Zeichnung

Die Erfindung wird im Folgenden in mehreren Ausführungsbeispielen anhand der Figuren näher erläutert. Es zeigen:
Figur 1 einen Gleichstrommotor mit einem kompakten Kommutatorläufer in schematischer Darstellung,
Figur 2 einen Längsschnitt durch einen Wickelkopf auf der kommutatorfernen Läuferseite als erstes Ausführungsbeispiel,
Figur 3 einen Ausschnitt aus der Vorderansicht des Wickelkopfes,
Figur 4 einen Blechstreifen mit freigestanzten U-Teilen als Verbindungselemente,
Figur 5 ein U-Teil aus Figur 4 nach dem Verdrehen um 90° aus der Ausgangslage,
Figur 6 das U-Teil aus Figur 5 nach dem Verbiegen und Umspritzen.
Figur 7 zeigt als zweites Ausführungsbeispiel einen Längsschnitt auf der Kommutatorseite des Läufers mit Anschlussfahnen als Verbindungselemente,
Figur 8 zeigt die Stirnseite des Läufers aus Figur 7 als Ausschnitt,
Figur 9 zeigt einen Längsschnitt durch die Kommutatorseite des Läufers als drittes Ausführungsbeispiel eines Anschlusses der Leiterstäbe,
Figur 10 zeigt im Ausschnitt die Stirnseite des Läufers nach Figur 9 und
Figur 11 zeigt einen Längsschnitt durch die Kommutatorseite des Läufers als viertes Ausführungsbeispiel für den Anschluss der Leiterstäbe.

### Beschreibung der Ausführungsbeispiele

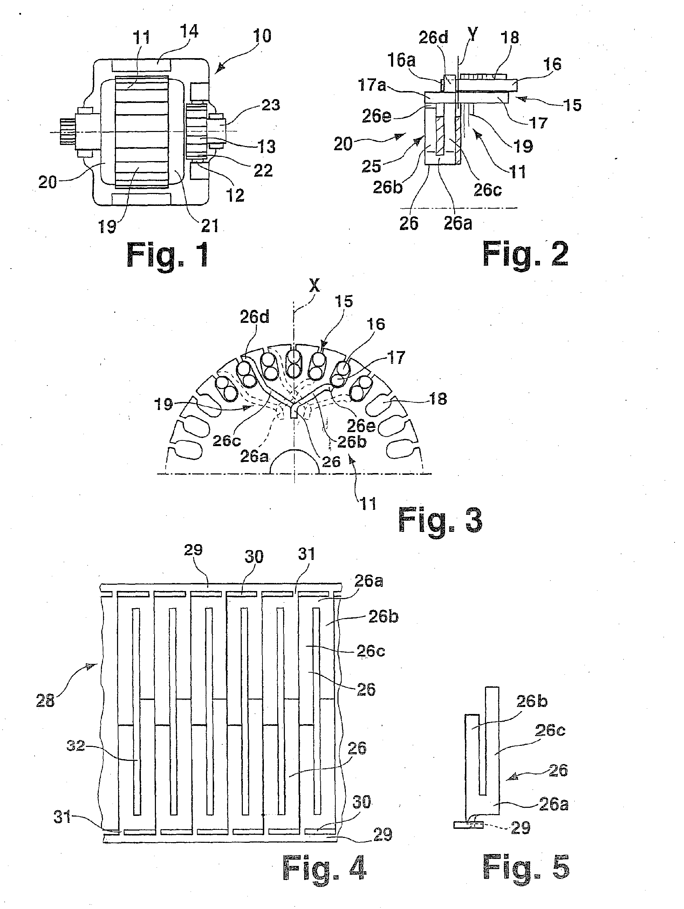

In Figur 1 ist ein Gleichstrommotor 10 für einen Starter von Brennkraftmaschinen mit einem Kommutatorläufer 11 schematisch dargestellt. Der Läufer wird über Kohlebürsten 12 von einem Trommelkommutator 13 mit Gleichstrom versorgt und wirkt mit den Permanentmagneten des ihn umgebenden Stators 14 zusammen.

Aus Figur 2 und 3 ist erkennbar, dass der Kommutatorläufer 11 eine Läuferwicklung 15 aus Leiterstäben 16, 17 aufweist, die in einer oberen und einer unteren Lage in Längsnuten 18 über den Umfang eines Läufer-Blechpaketes 19 angeordnet sind. Die Läuferwicklung 15 bildet an beiden Stirnseiten des Blechpaketes 19 Wickelköpfe 20, 21, in denen die Leiterstäbe 16 der oberen Lage jeweils um mindestens eine Polteilung in Umfangsrichtung versetzt mit einem der Leiterstäbe 17 der unteren Lage verbunden sind. Auf der Kommutatorseite sind diese Verbindungen noch mit den Lamellen 22 des Trommelkommutators 13 kontaktiert, der am hinteren Wickelkopf 21 auf einer Läuferwelle 23 befestigt ist.

Um die axiale Baulänge des Kommutatorläufers 11 möglichst kurz zu halten, müssen die Wickelköpfe 20, 21 möglichst kompakt ausgebildet werden. Zu diesem Zweck ist gemäß Figur 2 und 3 jede der stirnseitigen Verbindungen des Wickelkopfes 20 als separat hergestelltes Verbindungselement 25 in Gestalt eines U-förmigen Teiles 26 ausgebildet. Aus Figur 3 ist erkennbar, dass jedes der U-förmigen Teile 26 jeweils mit seinem Joch 26a vor der Stirnseite des Läufer-Blechpaketes 19 axial sowie radial ausgerichtet ist. Ferner sind dessen beide Schenkel 26b und 26c aus einer vom Joch 26a ausgehenden, radial nach außen gerichteten Ebene X in entgegengesetzten Richtungen soweit abgewinkelt, dass die Enden der beiden Schenkel 26b, 26c mit dem Endabschnitt 16a eines Leiterstabes 16 der oberen Lage sowie mit dem Endabschnitt 17a eines Leiterstabes 17 der unteren Lage elektrisch leitend verbunden ist. Die beiden durch das Verbindungselement 25 miteinander verbundenen Leiterstäbe 16, 17 sind um vier Nutteilungen zueinander versetzt, was in Figur 2 durch die Bruchlinie Y angedeutet wird. Damit die unteren Leiterstäbe 17 zum Anschweißen der Verbindungselemente 25 nicht von den oberen Leiterstäben 16 verdeckt werden, ist es wichtig, dass von den axial hintereinander angeordneten beiden Schenkeln 26b und 26c der U-förmigen Teile 26 der vordere Schenkel 26b jeweils mit dem Endabschnitt 17a eines Leiterstabes 17 der unteren Lage und der hintere Schenkel 26c jeweils mit dem Endabschnitt 16a eines Leiterstabes 16 der oberen Lage verbunden ist. Aus Figur 3 ist erkennbar, wie mehrere, zum Teil gestrichelt angedeutete U-förmige Teile 26 mit ihren auseinander gespreizten Schenkeln 26b und 26c zueinander angeordnet sind, so dass sie insgesamt vor der Stirnseite des Läufer-Blechpaketes 19 einen Kreisring bilden. Dabei ist der hintere Schenkel 26c jeweils zwischen zwei in benachbarten Längsnuten 18 angeordneten Leiterstäben 17 der unteren Lage hindurch geführt und mit seinem Ende an einem der darüber liegenden Leiterstäbe 16 der oberen Lage kontaktiert. Das Ende 26d des hinteren Schenkels 26c ist dabei zu dem äußeren der beiden Leiter 16 der oberen Lage abgebogen, so dass es dort jeweils mit einem der Läuferachse abgewandten Umfangsbereich dieses Leiterstabes ohne besondere Positionierung sicher zu verschweißen ist. Auch das Ende 26e der vorderen Schenkel 26b ist zur besseren Anlage an den Endabschnitt 17a der unteren Lage leicht abgebogen, so dass es mit einem der Läuferachse zugewandten Umfangsbereich des Leiterstabes 17 der unteren Lage ohne zusätzliche Positioniermaßnahmen sicher zu verschweißen ist.

Zur Herstellung der U-förmigen Teile 26 des vorderen Wickelkopfes 20 kann gemäß Figur 4 ein Blechstreifen 28 aus Kupfer verwendet werden, aus dem die U-förmigen Teile 26 zunächst paarweise flach gegenüberliegend freigestanzt werden. Die U-Teile 26 sind dabei aus dem Blechstreifen 28 derart nebeneinander liegend freigestanzt, dass ihre Joche 26a auf der den Schenkeln 26b, 26c abgewandten Seite mit einem gemeinsamen Steg 29 auf jeweils einer Seite des Blechstreifens 28 verbunden sind. Durch Ausstanzungen 30 können die U-förmigen Teile 26 an ihrer Verbindung 31 zum Steg 29 senkrecht aus der Ebene des Blechstreifens 28 heraus verdreht werden. Außerdem können die Schenkel 26b, 26c entgegengesetzt zueinander aus der Ebene des Blechstreifens 28 in ihre endgültige Form abgewinkelt werden. Durch Ausstanzungen 32 haben dabei die vorderen Schenkel 26b zur Vermeidung von Kurzschlüssen einen ausreichenden Abstand zu den axial dahinter liegenden Schenkeln 26c. Auf diese Weise wird aus der oberen und unteren Hälfte des Blechstreifens jeweils eine Kette von U-Teilen 26 in gleicher Zahl wie die Längsnuten 18 im Läufer-Blechpaket 19 hergestellt und nach dem Verformen über den Steg 29 in der Ebene des ursprünglichen Blechstreifens 28 zu einem Kreisring gebogen.

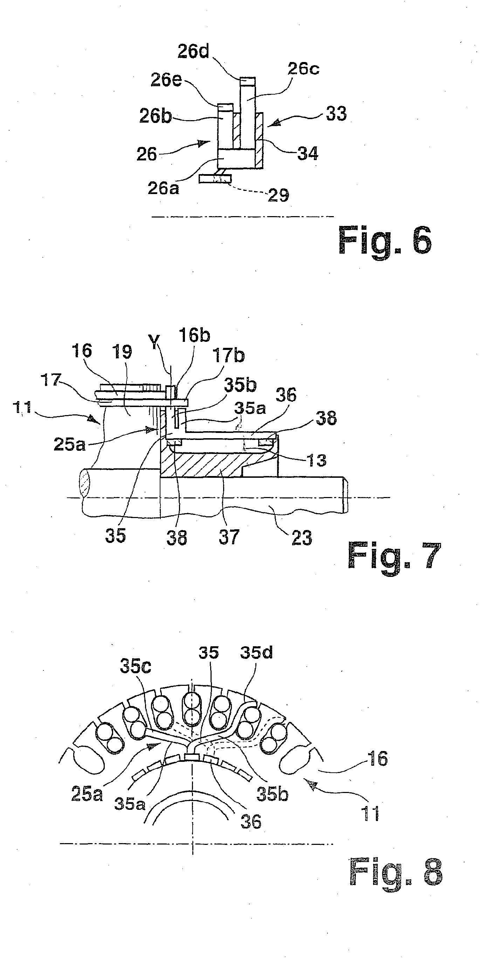

Figur 5 zeigt eines der U-förmigen Teile 26 nach dem Verdrehen um 90° am Steg 29 vor dem Spreizen der Schenkel 26b und 26c. Um die U-förmigen Teile 26 gegebenenfalls auf einen kleineren Kreisring-Durchmesser an der Stirnseite des Läufer-Blechpaketes 19 anbringen zu können, wird im Bedarfsfall der zu einem Ring gebogene Steg 29 in Achsrichtung mäanderförmig gebogen und damit der Durchmesser des Ringes verkleinert. Um bei der Anbringung der U-Teile 26 an der vorderen Stirnseite des Läufer-Blechpaketes 19 den dort erforderlichen axialen Abstand sicherzustellen, werden gemäß Figur 6 die U-förmigen Teile 26 mit Ausnahme der Schenkelenden 26d, 26e und des gemeinsamen Steges 29 in einem Kunststoffteil 34 aufgenommen. Dies wird in einfachster Weise in einer Spritzform mittels Kunststoff-Umspritzung gemacht. Danach wird der in Figur 6 gestrichelt angedeutete Steg 29 abgetrennt, so dass ein vorgefertigtes kreisringförmiges Bauteil 33 entsteht, mit dem die darin fixierten U-förmigen Teile 26 zu Herstellung der Verbindungen an den an der Läuferstirnseite axial vorstehenden Endabschnitten 16a, 17a der Leiterstäbe 16, 17 zu positionieren sind. Alternativ dazu kann das Kunststoffteil 34 auch als separate Scheibe vor der Stirnseite des Läufer-Blechpaketes positioniert werden und die U-förmigen Teile 26 werden einzeln nacheinander mit den Leiterstäben 16, 17 verschweißt.

Figur 7 zeigt als weiteres Ausführungsbeispiel die kommutatorseitigen Anschlüsse der Leiterstäbe 16, 17 des Kommutatorläufers 11, wobei dort die Verbindungselemente 25a in Form von U-förmigen Teilen durch Anschlussfahnen 35 von Kommutator-Lamellen 36 gebildet sind. Dabei befindet sich der Trommelkommutator 13 am hinteren Ende des Läufer-Blechpaketes 19 und die Anschlussfahnen 35 sind dort am hinteren axialen Ende der Lamellen 36 angeformt. Aus Figur 8 ist in der Ansicht auf das kommutatorseitige Ende des Läufers 11 erkennbar, dass die Anschlussfahnen 35 aus zwei axial hintereinander liegenden Schenkeln 35a, 35b gebildet sind, die entgegengesetzt zueinander seitlich abgewinkelt sind, wobei das Ende des vorderen Schenkels 35a mit dem axialen Endabschnitt 17b eines Leiterstabes 17 der unteren Lage und das Ende des hinteren Schenkels 35b mit dem axialen Endabschnitt 16b eines Leiterstabes 16 der oberen Lage verbunden ist. Die Kommutator-Lamellen 36 sind in bekannter Weise in einer Nabe 37 aus Kunststoff verankert, wobei zur Erzielung einer hohen Schleuderfestigkeit Armierungsringe 38 vorgesehen werden können. Für eine zuverlässige und gut zugängige Schweißverbindung der Leiterstäbe 16, 17 mit den Anschlussfahnen 35 sind auch hier die vorderen Schenkel 35a der Anschlussfahnen 35 gemäß Figur 8 mit einem der unteren Leiterstäbe 17 verschweißt und die hinteren Schenkel 35b sind jeweils um vier Nutteilungen versetzt zwischen zwei unteren Leiterstäben 17 hindurchgeführt und mit einem Leiterstab 16 der oberen Lage verschweißt. Außerdem sind auch hier die zugleich Verbindungselemente bildenden Anschlussfahnen 35 bis auf ihre Anschlussenden 35c, 35d im Kunststoff der Kommutatornabe 37 aufgenommen beziehungsweise eingebettet.

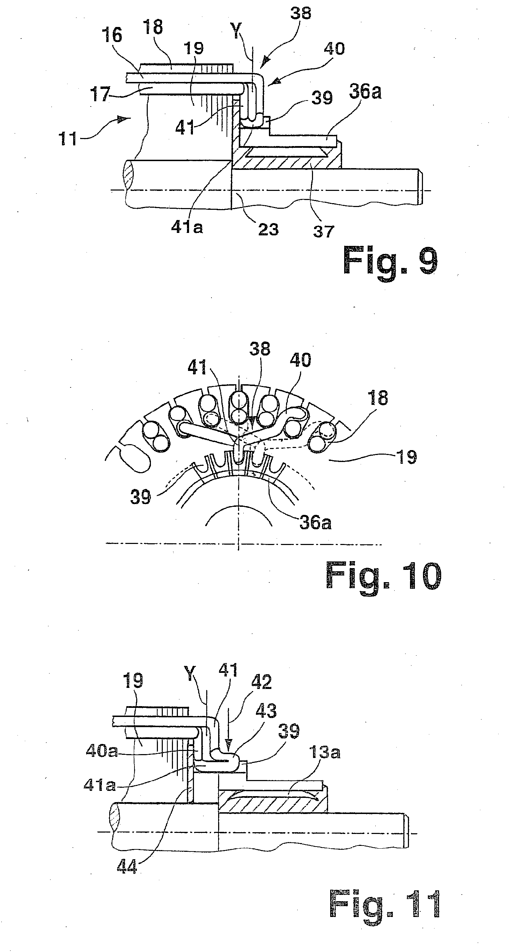

Alternativ zu dem Kommutatoranschluss der Leiterstäbe gemäß Figur 7 ist in Figur 9 und 10 als weiteres Ausführungsbeispiel am kommutatorseitigen Ende des Läufers 11 vorgesehen, die Leiterstäbe 16, 17 der oberen und unteren Lage jeweils paarweise gemäß Figur 10 als haarnadelförmig gebogene Spulenelemente 38 von der Kommutatorseite her in die Längsnuten 18 des Läufer-Blechpaketes 19 einzusetzen. Dabei ist der Verbindungsabschnitt 40 der beiden zueinander in Umfangsrichtung versetzten Leiterstäbe 16, 17 auf der dem Kommutator 13 zugewandten Stirnseite des Läufer-Blechpaketes 19 U-förmig auf jeweils eine Ansschlussstelle 39 einer Kommutator-Lamelle 36a abgekröpft. Dabei ist der Verbindungsabschnitt 40 an dem Jochbereich 41a der so gebildeten U-förmigen Abkröpfung 41 mit der Kommutator-Lamelle 36a verschweißt.

Um bei leistungsstärkeren Maschinen eine entsprechend größere Schweißverbindung an der Anschlussstelle 39 des Trommelkommutators 13a realisieren zu können, ist zum Aufsetzen eines Schweißstempels auf den Jochbereich 41a des Verbindungsabschnittes 40a in Richtung des Pfeiles 42 an dem Jochbereich 41a der U-förmigen Abkröpfung 41 ein axial abgewinkelter Vorsprung 43 vorgesehen. Sicherheitshalber ist auch hier an der kommutatorseitigen Stirnseite des Läufer-Blechpaketes 19 eine Isolierscheibe 44 angeordnet.

## Patentansprüche

1. Elektrische Maschine, insbesondere Gleichstrommaschine (10), vorzugsweise für Starter von Brennkraftmaschinen, mit einem Kommutatorläufer (11), dessen Läuferwicklung (15) aus Leiterstäben (16, 17) besteht, die in mindestens einer oberen und unteren Lage in Längsnuten (18) über den Umfang eines Läufer-Blechpaketes (19) angeordnet sind, wobei sich an beiden Stirnseiten des Blechpaketes Wickelköpfe (20, 21) befinden, in denen die Leiterstäbe (16) der oberen Lage jeweils um einen Wickelschritt in Umfangsrichtung versetzt mit einem der Leiterstäbe (17) der unteren Lage verbunden sind und wobei im Bereich des einen Wickelkopfes (21) ein Kommutator (13) auf einer Läuferwelle (23) befestigt ist, dessen Kommutator-Lamellen (36) mit den Verbindungen an diesem Wickelkopf (31) kontaktiert sind, **dadurch gekennzeichnet, dass** jede der stirnseitigen Verbindungen der Läuferstäbe (16, 17) an mindestens einem der beiden Wickelköpfe (20, 21) ein separat hergestelltes Verbindungselement (25) ist, dessen eines Ende mit dem Endabschnitt (16a) eines Leiterstabes (16) der oberen Lage und dessen anderes Ende mit dem Endabschnitt (17a) eines Leiterstabes (17) der unteren Lage verbunden ist.

2. Elektrische Maschine nach Anspruch 1, **dadurch gekennzeichnet, dass** die Verbindungselemente (25) eines Wicklungskopfes (20, 21) als U-förmige Teile (26) ausgebildet sind.

3. Elektrische Maschine nach Anspruch 2, **dadurch gekennzeichnet, dass** an den U-förmigen Teilen (26) jeweils deren Joch (26a) vor der Stirnseite des Läufer-Blechpaketes (19) axial sowie radial ausgerichtet ist und deren zwei Schenkel aus einer vom Joch (26a) ausgehenden, radial nach außen gerichteten Ebene (X) in entgegengesetzte Richtungen abgewinkelt sind, wobei die Enden (26d, 26e) der beiden Schenkel (26b, 26c) mit dem Endabschnitt (16a, 17a) eines Leiterstabes (16, 17) der oberen beziehungsweise der unteren Lage elektrisch leitend verbunden sind.

4. Elektrische Maschine nach Anspruch 3, **dadurch gekennzeichnet, dass** die Schenkel (26b, 26c) axial hintereinander angeordnet sind, wobei der vordere Schenkel (26b) mit einem Leiterstab (17) der unteren Lage und der hintere Schenkel (26c) jeweils mit einem Leiterstab (16) der oberen Lage verbunden ist.

5. Elektrische Maschine nach Anspruch 4, **dadurch gekennzeichnet, dass** der hintere Schenkel (26c) jeweils zwischen zwei in benachbarten Längsnuten (18) des Läufer-Blechpaketes (19) angeordneten Leiterstäben (17) der unteren Lage hindurchgeführt und sein Ende (26d) mit einem der darüberliegenden Leiterstäbe (16) der oberen Lage kontaktiert ist.

6. Elektrische Maschine nach Anspruch 5, **dadurch gekennzeichnet, dass** das Ende (26d) des hinteren Schenkels (26c) jeweils mit einem der Läuferachse abgewandten Umfangsbereich des Leiterstabes (16) der oberen Lage kontaktiert, insbesondere verschweißt ist.

7. Elektrische Maschine nach Anspruch 5 oder 6, **dadurch gekennzeichnet, dass** das Ende (26e) des vorderen Schenkels (26b) jeweils mit einem der Läuferachse zugewandten Umfangsbereich des Leiterstabes (17) der unteren Lage kontaktiert, insbesondere verschweißt ist.

8. Elektrische Maschine nach einem der vorherigen Ansprüche, **dadurch gekennzeichnet, dass** die separat hergestellten Verbindungselemente (25) auf der dem Kommutator (13) abgewandten Seite des Läufer-Blechpaketes (19) gemeinsam als U-förmige Teile (26) aus einem Blechstreifen (28) freigestanzt sind.

9. Elektrische Maschine nach Anspruch 8, **dadurch gekennzeichnet, dass** die U-förmigen Teile (26) aus dem Blechstreifen (28) derart nebeneinander liegend freigestanzt sind, dass ihre Joche (26a) auf der den Schenkeln (26b, 26c) abgewandten Seite mit einem gemeinsamen Steg (29) verbunden sind.

10. Elektrische Maschine nach Anspruch 9, **dadurch gekennzeichnet, dass** die U-förmigen Teile (26) an ihrer Verbindung (31) zum Steg (29) senkrecht zur Ebene des Blechstreifens (28) verdreht sowie die Schenkel (26b, 26c) entgegengesetzt zueinander abgewinkelt und der Steg (29) in der Ebene des Blechstreifens (28) zu einem Kreisring gebogen ist.

11. Elektrische Maschine nach Anspruch 10, **dadurch gekennzeichnet, dass** die U-förmigen Teile (26) mit Ausnahme der Schenkelenden (26d, 26e) und des gemeinsamen Steges (29) in einem Kunststoffteil (34) aufgenommen, insbesondere eingebettet sind.

12. Elektrische Maschine nach Anspruch 11, **dadurch gekennzeichnet, dass** das Kunststoffteil (34) mit den darin fixierten U-förmigen Teilen (26) zur Herstellung aller Verbindungen an den axial vorstehenden Endabschnitten (16a, 17a) der Leiterstäbe (16, 17) nach dem Abtrennen des gemeinsamen Steges (29) auf der Stirnseite des Läufer-Blechpaketes (19) zu positionieren ist.

13. Elektrische Maschine nach einem der Ansprüche 2 bis 7, **dadurch gekennzeichnet, dass** die als U-förmige Teile ausgebildeten Verbindungselemente (25a) auf der Kommutatorseite des Läufer-Blechpaketes (19) zugleich Anschlussfahnen (35) von Kommutator-Lamellen (36) bilden.

14. Elektrische Maschine nach Anspruch 13, **dadurch gekennzeichnet, dass** die Anschlussfahnen (35) am hinteren axialen Ende der Kommutator-Lamellen (36) eines Trommelkommutators (13) angeformt sind.

15. Elektrische Maschine nach Anspruch 14, **dadurch gekennzeichnet, dass** die Anschlussfahnen (35) bis auf ihre Anschlussenden (35c, 35d) im Kunststoff einer Kommutatornabe (37) aufgenommen, insbesondere eingebettet sind, in der ferner in an sich bekannter Weise die Kommutator-Lamellen (36) verankert sind.

16. Elektrische Maschine nach einem der Ansprüche 8 bis 12, **dadurch gekennzeichnet, dass** die Leiterstäbe (16, 17) paarweise als haarnadelförmig gebogene Spulenelemente (38) von der Kommutatorseite her in die Längsnuten (18) des Läufer-Blechpaketes (19) eingesetzt sind, wobei der Verbindungsabschnitt (40) der Leiterstäbe (16, 17) auf der dem Kommutator (13) zugewandten Stirnseite des Läufer-Blechpaketes (19) U-förmig auf jeweils eine Ansschlussstelle (39) einer Kommutator-Lamelle (36a) abgekröpft ist.

17. Elektrische Maschine nach Anspruch 16, **dadurch gekennzeichnet, dass** der Verbindungsabschnitt (40) am Jochbereich (41a) der U-förmigen Abkröpfung (41) mit der Kommutator-Lamelle (36a) verschweißt ist.

18. Elektrische Maschine nach Anspruch 17, **dadurch gekennzeichnet, dass** der Verbindungsabschnitt (40a) am Jochbereich seiner U-förmigen Abkröpfung (41) nochmals zur Kommutator-Lamelle (36) hin als Vorsprung (43) axial abgewinkelt ist.
